# EUROPEAN PATENT APPLICATION

(11) **EP 4 738 906 A1**
(43) Date of publication of application: **06.05.2026**
(21) Application number: 24306838.4
(22) Date of filing: 31.10.2024
(51) Int. Cl.: H04W 12/126, H04W 12/30, H04W 12/40

(54) **METHOD AND APPARATUS FOR PERSONALIZING A SECURE ELEMENT IN AN OEM FACTORY**

(71) Applicant: IDEMIA France, 92400 Courbevoie (FR)
(72) Inventor: UGLIETTI, Gianni, 92400 Courbevoie (FR); MACUDA, Jacek, 92400 Courbevoie (FR)
(74) Representative: Santarelli

(57) **Abstract**

The present invention concerns a method of personalization of a secure element, SE, in an original equipment manufacturer, OEM, factory, the method comprising by the SE the steps of: receiving from a first server operating in the OEM factory a generic unbound version of an SE operating system, OS; installing the SE's OS in the SE; launching the SE's OS in a manufacture state where the SE's OS is prevented to connect to a mobile network; sending to a second server operating in the OEM factory an in-factory profile request, the in-factory profile request comprising a token generated by the SE's OS based on a binding identifier; receiving from the second server a mobile network operator, MNO, profile bound to the binding identifier; sending to the second server a factory install notification indicating successful installation of the MNO profile in the SE; receiving from the second server a command for switching the SE's OS to a live state where the SE's OS is fully functional but prevented to send a further in-factory profile request; and switching the SE's OS to live state.

## Description

### FIELD OF THE INVENTION

The present disclosure concerns a method and a device for personalization of a secure element. It concerns more particularly a method for providing the secure element with an OS and personalization data. The secure element may be discrete or integrated, such as eUICC (for embedded Universal Identity Circuit Card, also called eSIM, for embedded Subscriber Identity Module), eSE (for embedded Secure Element), ieUICC (for integrated eUICC) or iUICC (for integrated UICC).

### BACKGROUND OF INVENTION

A wireless user terminal, a smartphone, connected objects or any computer device with communication capabilities using a telecommunication network (e.g. mobile (phone) network, wireless network, radiocommunication network) is traditionally provided with a secure element, SE, that may be removable, embedded, discrete or integrated. Such secure elements comprise Universal Integrated Circuit Cards, UICC, as Subscriber Identity Modules, SIM, cards, and their embedded versions known as eUICC for embedded UICC or eSIM (for embedded SIM), their integrated versions known as iUICC (for integrated UICC) or ieUICC (for integrated eUICC) or iSIM (for integrated eSIM). An eUICC module is a hardware secured element, generally of small size, which can be embedded or integrated in a communication device like a smartphone or TCU (for Telematics Control Unit used for connected vehicles) to provide the same functionalities of a traditional SIM card. eUICC are also integrated in many different communicating devices in the context of the so-called Internet of Things, loT.

An SE is typically manufactured by an SE manufacturer, SEM, to be provided to an Original Equipment Manufacturer, OEM, for integration in the devices produced by the OEM. In order to connect to and be able to communicate with a mobile network, a subscription is required with a Mobile Network Operator, MNO. All the parameters associated with the subscription are stored as an MNO profile in the SE. An SE may comprise several MNO profiles corresponding to different subscriptions with one or several MNOs.

An SE comprises a processor that can execute computer programs, memory for storing programs and data, and communication means for communicating with the final device it is integrated in, and through which it can communicate to a communication network.

SEs are provided by the SEM with an operating system, OS, that implements the functionalities of the SE. These functionalities comprise for example the implementation of application protocol data unit, APDU, commands as specified in the standard ISO/IEC 7814 part 4, used for communicating with the SE, or for example computation of specific cryptographic responses or vectors in order to grant an authentication and an access to mobile network resources. The operating system of the SE is not to be confused with the operating system that typically runs the final device integrating the SE.

The physical factor of SEs follows a process of increasing integration into the final device. Initially the SE was proposed as a smart card hosting the SE as a ship on the card, the well-known SIM card. The final device was provided with a card reader to allow the SIM card to be inserted in the final device. Then, a new physical format has been introduced, the eSIM standing for embedded SIM. An eSIM is a dedicated chip hosting the SE which is intended to be soldered on the mother board of the final device. A new physical format, the integrated eSIM or simply iSIM, is now appearing constituting a new step in the integration process. In this new physical format, the secure element may be integrated in a chip, typically a System On Chip, SOC, as one of the hardware component of the chip. The SOC is a central component which manage a lot of peripheral components or resources (memories, processors, screen, interfaces, computing resources, secure element, communications, ...).

Before being operational to allow the final device to connect to a cellular network, the SE must follow a personalization process including several steps. First an operating system, OS, must be loaded in the SE. The loaded OS is typically a generic version of the OS. Once loaded in the SE, the OS is bound to the particular chip on which it has been loaded, the chip being dedicated to the SE or a chip comprising the SE as one of its hardware components. This binding step is based on the unique chip identifier, called in this document Chipld, assigned to the chip comprising the SE by the chip manufacturer. This binding step ensures that the OS cannot run on any other chip with a different Chipld. Alternatively, the elD identifying the SE may be used instead of the Chipld. To make operational the SE and allow the final device to connect to a cellular network it is required to use a particular subscription to a mobile network operator, MNO. All the information linked to a particular subscription is provided as a profile comprising the identification of the MNO, the identification of the subscriber with its credentials to connect to the MNO network. At least one such profile must be loaded on the SE to allow the connection. The step of loading at least one profile on the SE is called personalization. All these steps are required for the final device to become operational and able to connect to a mobile network.

The personalization process implies a coordination between different actors, among them we can cite the secure element manufacturer, SEM, who is also typically the provider of the OS for this SE, the final device manufacturer, called OEM, and the MNO.

The whole personalization process is considered as critical regarding the security. This process used to be handled by the SEM. Indeed, the SEM manages the generation of the OS and the generation of the elD identifying into each SE. Upon reception of the subscription information, typically provided by the MNO, may generate the associated profile and run the personalization process. Due to its criticality, some security standards have been developed to certify the process, for example the Security Accreditation Scheme, SAS, proposed by the Global System for Mobile communications Association, GSMA. Typically, the SEM manufactories are certified to conduct the personalization process in a secure way.

The continuous integration process of the SE has some impact on the personalization process. Traditionally the manufacture of the SE and of the final device were separated processes. It's only when a user gets a final device and subscribes to MNO that the MNO obtains from the SEM the SE as a personalized SIM card. With eSIM, the SE has to be provided by the SEM to the OEM upstream before having any information on the final user and its subscription information. With iSIM, the situation becomes even more complex, as the SE may be actually manufactured or integrated by the manufacturer of the System On Chip, SOC, running the final device. This manufacturer may be the OEM itself or a new actor in the game, the chip manufacturer, typically under license from the SEM, who still provides the specification of the SE and the associated OS.

In this context, the whole personalization process is expected to be run in the OEM manufactories. OEM manufactories are considerably more numerous than SEM manufactories, and they are typically not certified by a security standard. There is a need for a personalization process that may be run in OEM factories without compromising the security of the process.

### SUMMARY OF THE INVENTION

The present invention has been devised to address one or more of the foregoing concerns.

According to a first aspect of the invention there is provided a method of personalization of a secure element, SE, in an original equipment manufacturer, OEM, factory, the method comprising by the SE the steps of:
- receiving from a first server operating in the OEM factory a generic unbound version of an SE operating system, OS;
- installing the SE's OS in the SE;
- launching the SE's OS in a manufacture state where the SE's OS is prevented to connect to a mobile network;
- sending to a second server operating in the OEM factory an in-factory profile request, the in-factory profile request comprising a token generated by the SE's OS based on a binding identifier;
- receiving from the second server a mobile network operator, MNO, profile bound to the binding identifier;
- sending to the second server a factory install notification indicating successful installation of the MNO profile in the SE;
- receiving from the second server a command for switching the SE's OS to a live state where the SE's OS is fully functional but prevented to send a further in-factory profile request;
- switching the SE's OS to live state.

In some embodiments, the binding identifier is a ChipID identifying the chip comprising the SE.

In some embodiments, the binding identifier is an elD identifying the SE.

In some embodiments, the method further comprises:
- Sending a binding notification comprising a ChipID identifying the chip comprising the SE, an elD identifying the SE and an ICCID identifying the profile to a third server outside the OEM factory at first connection of the SE to a mobile network.

In some embodiments, the token is encrypted with a one-time symmetric key generated by the SE's OS.

In some embodiments, the token comprises the binding identifier signed and encrypted with the one-time symmetric key.

According to another aspect of the invention there is provided a method of personalization of a secure element, SE, in an original equipment manufacturer, OEM, factory, the method comprising by a first server operating in the OEM factory, the steps of:
- receiving from a second server outside of the OEM factory an unbound protected mobile network operator, MNO, profile;
- receiving from the SE an in-factory profile request, the in-factory profile request comprising a token generated by the SE based on a binding identifier;
- binding the MNO profile to the SE based on the Binding identifier and reserving the Binding identifier for preventing further binding of profiles using the same Binding identifier;
- sending the bound MNO profile to the SE;
- receiving a factory install notification indicating successful installation of the MNO profile in the SE;
- burning the Binding identifier for definitively preventing further binding of profiles using the same Binding identifier;
- sending a command to the SE for switching to a live state.

In some embodiments, the method further comprises:
- validating the token.

According to another aspect of the invention there is provided a secure element, SE, in an original equipment manufacturer, OEM, factory comprising at least one processor and at least one memory in communication with the at least one processor, the at least one memory including computer-readable instructions stored thereon that, when executed by the at least one processor, cause the SE to:
- receiving from a first server operating in the OEM factory a generic unbound version of an SE operating system, OS;
- installing the SE's OS in the SE;
- launching the SE's OS in a manufacture state where the SE's OS is prevented to connect to a mobile network;
- sending to a second server operating in the OEM factory an in-factory profile request, the in-factory profile request comprising a token generated by the SE's OS based on a binding identifier;
- receiving from the second server a mobile network operator, MNO, profile bound to the binding identifier;
- sending to the second server a factory install notification indicating successful installation of the MNO profile in the SE;
- receiving from the second server a command for switching the SE's OS to a live state where the SE's OS is fully functional but prevented to send a further in-factory profile request;
- switching the SE's OS to live state.

According to another aspect of the invention there is provided a server operating in an original equipment manufacturer, OEM, factory comprising, for personalizing a secure element, SE, at least one processor and at least one memory in communication with the at least one processor, the at least one memory including computer-readable instructions stored thereon that, when executed by the at least one processor, cause the server to:
- receiving from a first server operating in the OEM factory a generic unbound version of an SE operating system, OS;
- installing the SE's OS in the SE;
- launching the SE's OS in a manufacture state where the SE's OS is prevented to connect to a mobile network;
- sending to a second server operating in the OEM factory an in-factory profile request, the in-factory profile request comprising a token generated by the SE's OS based on a binding identifier;
- receiving from the second server a mobile network operator, MNO, profile bound to the Binding identifier;
- sending to the second server a factory install notification indicating successful installation of the MNO profile in the SE;
- receiving from the second server a command for switching the SE's OS to a live state where the SE's OS is fully functional but prevented to send a further in-factory profile request;
- switching the SE's OS to live state.

According to another aspect of the invention there is provided a computer program product for a programmable apparatus, the computer program product comprising a sequence of instructions for implementing a method according to the invention, when loaded into and executed by the programmable apparatus.

According to another aspect of the invention there is provided a computer-readable storage medium storing instructions of a computer program for implementing a method according to the invention.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible, non-transitory carrier medium may comprise a storage medium such as a floppy disk, a CD-ROM, a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:
**Figure 1** illustrates the general architecture of an exemplary system that may be used to implement embodiments of the invention;
**Figure 2** illustrates the main steps of a personalization process according to embodiments of the invention;
**Figure 3** is a schematic block diagram of a computing device for implementation of one or more embodiments of the invention.

### DETAILED DESCRIPTION OF THE INVENTION

It is proposed in this document a method for personalization of a SE that may be conducted in an OEM factory that guarantee that a personalized OS dedicated to a given SE cannot be cloned and used in another SE. By personalized OS we mean providing a secure element SE with an operating system OS and personalization data (typically, for example, a profile).

In the context of iSIM, the personalization process faces some constraints that must be taken into account. A first constraint is that the OEM factories are not accredited by a security standard. The OEM factory cannot be considered as a safe place from the security perspective. This means that the security must be guaranteed by the personalization process itself.

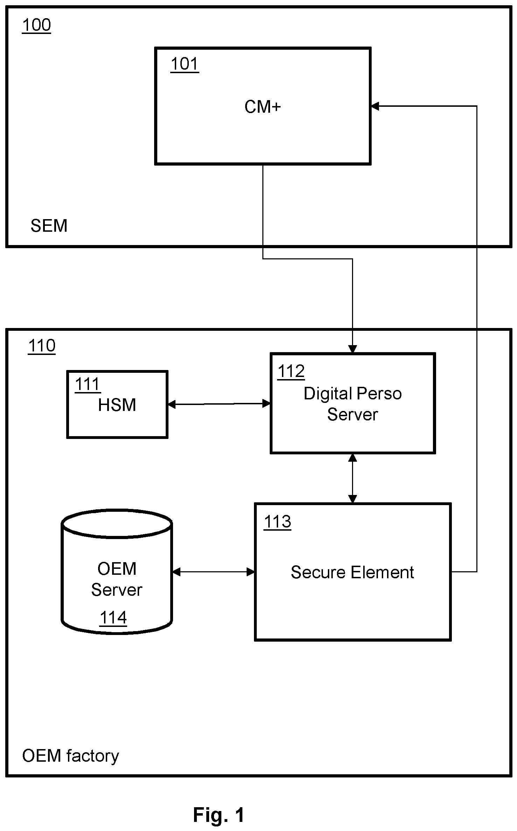

**Figure 1** illustrates the general architecture of an exemplary system that may be used to implement embodiments of the invention.

A first domain corresponds to a Secure Element Manufacturer, SEM, domain 100. In this domain 100, the SEM handles a Consumer Management, CM+, server 101.

A second domain corresponds to an OEM factory domain 110. The SE personalization method as described in this disclosure is controlled in the OEM factory by a Digital Perso Server, DPS, 112. This DPS collaborates with a Hardware Security Module, HSM, 111. A hardware security module is a physical computing device that safeguards and manages secrets (most importantly digital keys), performs encryption and decryption functions for digital signatures, strong authentication and other cryptographic functions. These modules traditionally come in the form of a plug-in card or an external device that attaches directly to a computer or network server. A hardware security module contains one or more secure cryptoprocessor chips. An SE 113 is the SE subject of the personalization method. The method of personalization is intended to be applied to all the SEs used by an OEM manufacturer to manufacture terminals. The method is illustrated here for a single SE for clarity. The SE 113 is typically implemented in a final terminal and uses its communication capabilities to communicate with the DPS 112 or an OEM server 114. The OEM server 114 is intended to store generic version of an SE's OS.

Communications between the SEM domain 100 and the OEM domain 110 are asynchronous. This means that the described process does not require a permanent connexion between the two domains. The SEM typically provides the generic version of the SE's OS. This generic version of the OS is stored protected, for example encrypted, on the OEM server 114 to be loaded and installed in the SE 113. The SEM also typically provides MNO profiles in a protected version. The MNO profiles provided by the SEM are not yet bound to a particular SE. The binding of an MNO profile to a particular SE is made during the described process of personalization of the SE, as detailed below.

The DPS 112, according to some embodiments, may be provided by the SEM to be installed and operated by the OEM in the OEM factory. A preliminary step of exchanging keys, allows the CM+ 101 and the DPS 112 to establish a protected channel of communication. The DPS 112 takes advantage of the HSM 111 for handling this protected channel of communication.

The communication illustrated between the SE 113 and the CM+ 101 occurs at the first connection of the SE to the mobile network and through the mobile network. By first connection we mean the first connection to the mobile network by the final device which embeds the SE and so on the involvement of the SE in the process to establish this connection to the mobile network, for example authentication.

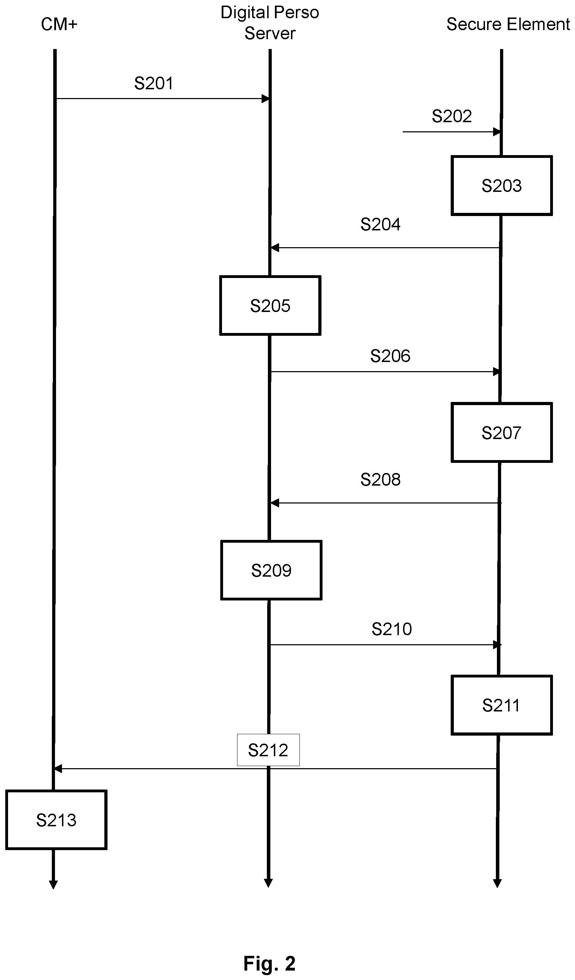

**Figure 2** illustrates the main steps of a personalization process according to embodiments of the invention.

During a step S201, the CM+ 101 server generates and provides an unbound protected MNO profile to the DPS 112. This step may occur anytime before the personalization process actually begins. As already mentioned, the communications between the SEM domain 100 and the OEM factory domain 110 are asynchronous.

During a step S202, the SE 113 is loaded with a generic version of the SE's OS. This generic version of the SE's OS is typically loaded from the OEM server 114. The generic version of the SE's OS is typically encrypted using a symmetric key shared by the CM+ server 101 and stored in the SE 113 by the SEM. This key is not known from the OEM. This ensures that even in a context where the OEM factory would be compromised, there is no way to decrypt the generic version of the SE's OS except by the SE 113 itself within the secure enclave provided by the SE 113.

According to one aspect of the invention, the SE's OS is provided in two distinct running states, a manufacture state and a live state.

In the manufacture state, the SE's OS is able of functioning but prevented to connect to a mobile network. As such, a final device provided with a SE having its OS in manufacture state cannot connect to a mobile network. This ensures that the SE is not fully functional and any clone of the SE's OS in manufacture state is not usable. This also ensures that no commercial use of the product (final device and SE) is done unless personalization has been fully executed. While an SE's OS in manufacture state cannot connect to a mobile network, other functionalities of the OS are operational. In particular, all the functions used in the personalization process herein described can be used. These functions may be used by exchanging commands with the SE 113.

In the live state, the SE's OS is fully functional. By "fully functional" it shall be understood that the OS has the possibility to connect to a mobile network but prevented to switch back in the manufacture state.

The SE's OS is configured to start at first launch in manufacture state. The switch from manufacture state to live state is controlled by the present personalization process once the personalization is validated by the DPS 112. Advantageously, there is no way for the SE's OS to switch back in the manufacture state.

Once loaded in the SE, the SE's OS is launched in manufacture state.

During the first launch of the SE's OS, the SE's OS is able to read out a ChipID burnt by the chip manufacturer in the chip hardware comprising the SE. During step S203, the SE generates a unique token. This token is based on a binding identifier of the SE. In some embodiments, the binding identifier is the ChipID identifying the chip comprising the SE. In some other embodiments, the elD identifying the SE itself is used for binding the profile. For example, the token may comprise the binding identifier signed and encrypted using a onetime symmetric key generated conjointly by the SE and the DPS, for example using the Diffie Hellman method. In another example, the token may comprise the binding identifier, respectively, signed and encrypted, using, respectively, an asymmetric private key, for example a onetime asymmetric private key, generated by the SE, used to sign the binding identifier and an asymmetric public key, for example a onetime asymmetric public key, of the DPS, used to encrypt the signed binding identifier. The asymmetric private key generated by the SE is part of a couple of asymmetric keys generated by the SE which include also an asymmetric public key. The asymmetric public key of the DPS is part of a couple of asymmetric keys generated by the DPS which include also an asymmetric private key. In an example, the token advantageously comprises the asymmetric public key generated by the SE. For example, the transmission of this asymmetric public key is done by using a certificate. The token has to be unique and to allow the DPS to retrieve the binding identifier of the SE based on the token. The unicity of the token in the exemplary embodiment derives from the unicity of the binding identifier.

During step S204, the SE sends a so called in-factory profile request to the DPS comprising the generated token. When the public key of the onetime asymmetric key is not comprised in the token, it may be inserted in this request. For example, by using a certificate, the key itself or an identifier of the key.

It is to be noted that, advantageously, the SE's OS functions used to generate the token and to send the request are available only in manufacture state. An SE's OS in live state is prevented from an attempt for a new personalization.

During step S205, the DPS receives the in-factory profile request sent by the SE. The DPS then retrieves the token from the request and may validate the token. Validation consists in decrypting the token, verifying the signature and retrieving the binding identifier using the onetime symmetric key. In another example, to validate the token, DPS decrypts the token by using its, for example onetime, asymmetric private key and verifies the signature by using the, for example onetime, asymmetric public key of the SE. If the validation is successful, the DPS gets the first available MNO profile among the unbound protected MNO profiles received from the CM+ server in step S201.

The DPS bounds the MNO profile to the SE using the retrieved binding identifier and a unique identifier ICCID (for "Integrated Circuit Card IDentifier") of the MNO profile. Then the MNO profile bound to the SE via the retrieved binding identifier is reserved. This means that the DPS will refuse a further request regarding the same MNO profile identified by its ICCID whatever the retrieved binding identifier. That's mean also that the MNO profile assigned to this Binding identifier will no further be available for another Binding identifier. That prevent profile cloning on different secure element SE. As described later, the Binding identifier will ultimately be burnt at the end of the personalization process. The difference between a reserved Binding identifier and a burnt one is that the reservation may be reversed. Actually, if something goes wrong during the personalization process, the whole process can be rolled back for a new attempt. Once the Binding identifier is burnt, there are not reverse possibilities. A burnt Binding identifier is definitively prevented to be used again in a personalization process.

The DPS generates a one-time encryption key for encrypting a package comprising the bound MNO profile. In an example, the one-time encryption key generation is based on a cryptographic key named transport key. The transport key is a symmetric key which is stored into the SE and also into the DPS. In this example the DPS derives the transport key related to the SE for which it has received the in-factory profile request. By *"derives the transport key"* we mean generate or compute a new value of the key by using specific parameters and an algorithm. For example, the transport key derivation made by the DPS is done by using the received Binding identifier of the SE, a value of a counter related to this SE (and located on the DPS side) and for example AES algorithm. The transport key had been previously provisioned into the DPS or retrieved by the DPS from the HSM or provisioned to the DPS by the HSM.

During step S206, the DPS responds to the in-factory profile request by transmitting to the SE the encrypted package comprising the MNO profile bound to the SE using the retrieved Binding identifier.

During step S207, the SE's OS decrypts and installs the MNO profile. The decryption operation is the inverse operation related to the encryption operation which has been made by the DPS on the received encrypted profile. That's mean the SE must generate a one-time decryption key to decrypt the MNO profile. As the one-time encryption key used by the DPS to encrypt the MNO profile is based on the transport key which is a symmetric key, the SE must use this same key and derive it by the same way as proceed by the DPS, in order to obtain the same one-time key but to decrypt the received encrypted MNO profile. Then the SE generates the one-time decryption key based on the cryptographic transport key. This generation as already mentioned for the generation made by the DPS is done by using the Binding identifier of the SE, a value of a counter stored on the SE (and should be the same as the one used by the DPS) and the same algorithm as the one used by the DPS (for example AES). Once the one-time decryption key is generated, the SE decrypts the MNO profile. When the installation of the MNO profile is successfully completed, the SE's OS generates a factory install notification. In case of failure in the MNO profile installation an error message is generated and the process may be rolled back.

During step S208, the factory install notification, or the error message, is transmitted by the SE to the DPS. In the following, we assume a successful installation of the MNO profile.

During step S209, the DPS burns the Binding identifier. This means that the Binding identifier which was only reserved until this stage is now definitively prevented to be used in any further personalization process.

During step S210, the DPS sends to the SE a command for switching from manufacture state to live state.

During step S211, the SE is switched to the live state and the SE's OS run to the live state. The switch is definitive and cannot be reversed. In live state, the SE's OS cannot execute a new attempt of personalization as some key functions are disabled, comprising the generation of the token. In summary, in live state the SE's OS is prevented to send a further in-factory profile request.

At this stage, the personalization process itself may be considered as completed. Nevertheless, the SEM advantageously keeps a record of the personalization operation and more particularly of the burnt Binding identifier. Normally, the DPS which keeps also a record of the personalization operation conducted under its control sends back this information to the CM+ server when connected to the latter. To further secure the information of the CM+ server of the personalization operation, optional steps S212 and S213 may complete the process.

During step S212, the first time the SE in live state connects to a mobile network, the SE's OS transmits to the CM+ server a binding notification. Advantageously, the binding notification comprises the ChipID, the elD and the ICCID. As a reminder, the ChipID is a unique identifier burnt by the chip manufacturer into the chip hardware comprising the SE and identifying the chip comprising the SE. The elD is generated and handled by the SE's OS, this identifier is unique for a personalized SE. The elD identifies the SE. The ICCID is an identifier of the MNO profile. As several MNO profiles may be loaded in a single SE, several ICCID may correspond to an elD.

During step S213, the CM+ server of the SEM updates its record with the association of the profile and the Binding identifier. Advantageously, the Binding identifier is also associated with the version of SE's OS loaded in the SE.

The described process guarantees the security of the personalization process even without a certification according to a security accreditation scheme. It is not complex and may be easily implemented in the OEM factory. It guarantees a safe binding and anti-cloning solution and allows a secure load of the OS and profile in the SE without requiring by the SEM a preliminary knowledge of the concerned Binding identifier.

It is to be noted that the role of SEM as described in the exemplary embodiment, where a same actor, the SEM, provides the SE's OS, the profiles and the SE chips may be broadened. Actually, the described process may be used to personalized SE provided by other manufacturers. The role of the SEM domain may be reduced to a personalization operator. In this context, the SE's OS, the MNO profiles and the SEM may be different from the personalization operator. The personalization operator may be provided with the generic version of the SE's OS and the MNO profiles by tiers actors.

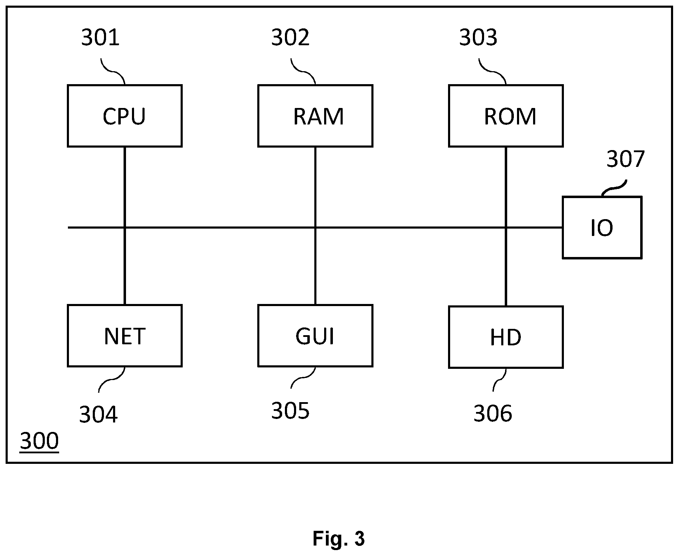

**Figure 3** is a schematic block diagram of a computing device 300 for implementation of one or more embodiments of the invention. The computing device 300 may be a device such as a micro-computer, a workstation or a light portable device. The computing device 300 comprises a communication bus connected to:
- a central processing unit 301, such as a microprocessor, denoted CPU;
- a random access memory 302, denoted RAM, for storing the executable code of the method of embodiments of the invention as well as the registers adapted to record variables and parameters necessary for implementing the method according to embodiments of the invention, the memory capacity thereof can be expanded by an optional RAM connected to an expansion port for example;
- a read only memory 303, denoted ROM, for storing computer programs for implementing embodiments of the invention;
- a network interface 304 is typically connected to a communication network over which digital data to be processed are transmitted or received. The network interface 304 can be a single network interface, or composed of a set of different network interfaces (for instance wired and wireless interfaces, or different kinds of wired or wireless interfaces). Data packets are written to the network interface for transmission or are read from the network interface for reception under the control of the software application running in the CPU 301;
- a graphical user interface 305 may be used for receiving inputs from a user or to display information to a user;
- a hard disk 306 denoted HD may be provided as a mass storage device;
- an I/O module 307 may be used for receiving/sending data from/to external devices such as a video source or display.

The executable code may be stored either in read only memory 303, on the hard disk 306 or on a removable digital medium such as for example a disk. According to a variant, the executable code of the programs can be received by means of a communication network, via the network interface 304, in order to be stored in one of the storage means of the communication device 300, such as the hard disk 306, before being executed.

The central processing unit 301 is adapted to control and direct the execution of the instructions or portions of software code of the program or programs according to embodiments of the invention, which instructions are stored in one of the aforementioned storage means. After powering on, the CPU 301 is capable of executing instructions from main RAM memory 302 relating to a software application after those instructions have been loaded from the program ROM 303 or the hard-disc (HD) 306 for example. Such a software application, when executed by the CPU 301, causes the steps of the flowcharts of the invention to be performed.

Any step of the algorithms of the invention may be implemented in software by execution of a set of instructions or program by a programmable computing machine, such as a PC ("Personal Computer"), a DSP ("Digital Signal Processor") or a microcontroller; or else implemented in hardware by a machine or a dedicated component, such as an FPGA ("Field-Programmable Gate Array") or an ASIC ("Application-Specific Integrated Circuit").

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

Each of the embodiments of the invention described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method of personalization of a secure element, SE, (113) in an original equipment manufacturer, OEM, factory, the method comprising by the SE (113) the steps of:
- receiving (S202) from a first server (114) operating in the OEM factory a generic unbound version of an SE operating system, OS;
- installing (S203) the SE's OS in the SE;
- launching the SE's OS in a manufacture state where the SE's OS is prevented to connect to a mobile network;
- sending (S204) to a second server (112) operating in the OEM factory an in-factory profile request, the in-factory profile request comprising a token generated by the SE's OS based on a binding identifier;
- receiving from the second server (112) a mobile network operator, MNO, profile bound to the binding identifier;
- sending (S208) to the second server (112) a factory install notification indicating successful installation of the MNO profile in the SE (113);
- receiving (S210) from the second server (112) a command for switching the SE's OS to a live state where the SE's OS is fully functional but prevented to send a further in-factory profile request;
- switching (S211) the SE's OS to live state.

2. The method of claim 1, wherein the binding identifier is a ChipID identifying the chip comprising the SE.

3. The method of claim 1, wherein the binding identifier is an elD identifying the SE.

4. The method of claim 1, wherein the method further comprises:
- Sending (S212) a binding notification comprising a ChipID identifying the chip comprising the SE, an elD identifying the SE and an ICCID identifying the profile to a third server (101) outside the OEM factory at first connection of the SE to a mobile network.

5. The method of any claim 1 to 4, wherein the token is encrypted with a one-time symmetric key generated by the SE's OS.

6. The method of claim 5, wherein the token comprises the binding identifier signed and encrypted with the one-time symmetric key.

7. A method of personalization of a secure element, SE, in an original equipment manufacturer, OEM, factory, the method comprising by a first server (112) operating in the OEM factory, the steps of:
- receiving (S201) from a second server (101) outside of the OEM factory an unbound protected mobile network operator, MNO, profile;
- receiving (S204) from the SE an in-factory profile request, the in-factory profile request comprising a token generated by the SE based on a binding identifier;
- binding (S205) the MNO profile to the SE based on the Binding identifier and reserving the Binding identifier for preventing further binding of profiles using the same Binding identifier;
- sending (S206) the bound MNO profile to the SE;
- receiving (S208) a factory install notification indicating successful installation of the MNO profile in the SE;
- burning (S209) the Binding identifier for definitively preventing further binding of profiles using the same Binding identifier;
- sending (S210) a command to the SE for switching to a live state.

8. The method of claim 7, wherein the method further comprises:
- validating the token.

9. A secure element, SE, (113) in an original equipment manufacturer, OEM, factory comprising at least one processor and at least one memory in communication with the at least one processor, the at least one memory including computer-readable instructions stored thereon that, when executed by the at least one processor, cause the SE to:
- receiving (S202) from a first server (114) operating in the OEM factory a generic unbound version of an SE operating system, OS;
- installing (S203) the SE's OS in the SE;
- launching the SE's OS in a manufacture state where the SE's OS is prevented to connect to a mobile network;
- sending (S204) to a second server (112) operating in the OEM factory an in-factory profile request, the in-factory profile request comprising a token generated by the SE's OS based on a binding identifier;
- receiving from the second server (112) a mobile network operator, MNO, profile bound to the binding identifier;
- sending (S208) to the second server (112) a factory install notification indicating successful installation of the MNO profile in the SE (113);
- receiving (S210) from the second server (112) a command for switching the SE's OS to a live state where the SE's OS is fully functional but prevented to send a further in-factory profile request;
- switching (S211) the SE's OS to live state.

10. A server (112) operating in an original equipment manufacturer, OEM, factory comprising, for personalizing a secure element, SE, (113) at least one processor and at least one memory in communication with the at least one processor, the at least one memory including computer-readable instructions stored thereon that, when executed by the at least one processor, cause the server (112) to:
- receiving (S202) from a first server (114) operating in the OEM factory a generic unbound version of an SE operating system, OS;
- installing (S203) the SE's OS in the SE;
- launching the SE's OS in a manufacture state where the SE's OS is prevented to connect to a mobile network;
- sending (S204) to a second server (112) operating in the OEM factory an in-factory profile request, the in-factory profile request comprising a token generated by the SE's OS based on a binding identifier;
- receiving from the second server (112) a mobile network operator, MNO, profile bound to the Binding identifier;
- sending (S208) to the second server (112) a factory install notification indicating successful installation of the MNO profile in the SE (113);
- receiving (S210) from the second server (112) a command for switching the SE's OS to a live state where the SE's OS is fully functional but prevented to send a further in-factory profile request;
- switching (S211) the SE's OS to live state.

11. A computer program product for a programmable apparatus, the computer program product comprising a sequence of instructions for implementing a method according to any one of claims 1 to 8, when loaded into and executed by the programmable apparatus.

12. A computer-readable storage medium storing instructions of a computer program for implementing a method according to any one of claims 1 to 8.
